# EUROPEAN PATENT APPLICATION

(11) **EP 3 644 422 A1**
(43) Date of publication of application: **29.04.2020**
(21) Application number: 19151129.4
(22) Date of filing: 10.01.2019
(51) Int. Cl.: H01M 8/0258, H01M 8/0226, H01M 8/0213, H01M 8/0221, H01M 8/1018, H01M 8/0267

(54) **FUEL CELL SEPARATOR INCLUDING EMBOSSING STRUCTURE FOR UNIFORM DISTRIBUTION OF GAS AND FUEL CELL STACK INCLUDING THE SAME**

(30) Priority: 26.10.2018 KR 20180129260
(71) Applicant: Korea Institute of Energy Research, Daejeon 34129 (KR)
(72) Inventor: KIM, Min-jin, 34069 Daejeon (KR); SOHN, Young-jun, 34049 Daejeon (KR); KIM, Seung-gon, 34127 Daejeon (KR); OH, Hwan Yeong, 34185 Daejeon (KR); LEE, Won-yong, 34032 Daejeon (KR); SHIN, Dong Won, 30150 Sejong-si (KR); PARK, Gu-gon, 34049 Daejeon (KR); BAE, Byungchan, 34049 Daejeon (KR); YIM, Sung-dae, 34125 Daejeon (KR); PARK, Seok-hee, 34049 Daejeon (KR); YANG, Tae-hyun, 34120 Daejeon (KR); KIM, Chang-soo, 22310 Incheon (KR)
(74) Representative: Gevers Patents

(57) **Abstract**

Disclosed is a high-temperature polymer electrolyte membrane fuel cell (HT-PEMFC) separator including a first inlet (21) configured to receive a first reaction gas, a first outlet configured to discharge the first reaction gas, a first reaction surface (23) disposed between the first inlet (21) and the first outlet, a second inlet configured to receive a second reaction gas, a second outlet configured to discharge the second reaction gas, and a second reaction surface disposed between the second inlet and the second outlet, in which the first reaction surface (23) includes a plurality of first straight channels (231) through which the first reaction gas flows, and a first diverging portion (24) is disposed between the first inlet (21) and the first reaction surface (23) and configured to uniformly divide the first reaction gas into the plurality of first straight channels (231) from the first inlet by a plurality of projections (241, 242, 243) each elongated in a direction perpendicular to the plurality of first straight channels (231).

## Description

### Technical Field

Example embodiments relate to a fuel cell separator including a thin plate-based embossing structure for uniform distribution of gas, and a fuel cell stack including the fuel cell separator.

### Background Art

A fuel cell is gaining great attention as promising future clean energy for its high efficiency, environment-friendliness, high-output density, and the like. In the meantime, an existing low-temperature polymer electrolyte membrane fuel cell (LT-PEMFC) may experience difficulties in its commercialization due to some reasons. A water control system such as a humidifier, a water trap, and the like may need to be used to operate the LT-PEMFC. In addition, supplying fuel thereto may not be easy, and hydrogen having a relatively low concentration of specific impurities may need to be used. The heat obtainable by operating the LT-PEMFC has a low exhaust heat temperature and may thus be limitedly used. Thus, research on a high-temperature polymer electrolyte membrane fuel cell (HT-PEMFC), as an alternative of the LT-PEMFC, is actively ongoing. The HT-PEMFC may use a polybenzimidazole (PBI)-based electrolyte membrane on which phosphoric acid is doped and may be operable without using separate humidification. In addition, since water generated by the operation of the fuel cell occurs in a form of vapor, a separate water trap may not be required. Further, if the HT-PEMFC is at an operation temperature of 150 to 180 , poisoning of CO may occur. A performance degradation phenomenon of a membrane electrode assembly (MEA) by such poisoning of CO may be remarkably reduced. Accordingly, the HT-PEMFC may be resistant up to CO concentration of 3%. Due to such a phenomenon, a CO removal process may be reduced, or alternatively, minimized during a hydrogen reforming process. In addition, a high exhaust heat temperature close to 100 may be obtained, and thus thermal energy may be variously available.

However, further research and development are still required for the HT-PEMFC. Theoretically, the HT-PEMFC has a high electrochemical reaction speed. However, the performance of an actually-used HT-PEMFC does not reach the performance of the LT-PEMFC. Due to harsh operation conditions, for example, exposure to phosphoric acid and high temperature, the HT-PEMFC has a relatively poor durability and a relatively short life.

For example, if a portion of the fuel cell is damaged under a high temperature operating condition, a cooling medium may permeate an MEA and the performance of the fuel cell may be degraded. In addition, oil used as a cooling medium of an HT-PEMFC stack has a relatively high viscosity. Thus, the oil may cause a high differential pressure in a circulating path, which may also lead to the damage of the fuel cell. Further, the HT-PEMFC stack has a relatively significant internal temperature deviation compared to an LT-PEMFC stack. Thus, a performance, a degradation level, and a cell life (or a lifespan of the fuel cell stack) may greatly vary depending on a temperature management.

However, heat of high temperature may also be the greatest hindrance to the commercialization of such an HT-PEMFC. In a thermal distribution of the HT-PEMFC, a temperature of a center portion of an HT-PEMFC stack may be relatively higher, and a local generation of high heat may be frequently discovered. This is because the heat generated by an electrochemical reaction may not escape but be accumulated, which may be a major cause of the deterioration of components including an MEA of the stack and the degradation of durability.

### Disclosure of Invention

### Technical Goals

An aspect provides a separator of a structure with a high processability and allowing gas to be uniformly distributed, the separator that may improve a cooling effect by an independent cooling plate and providing a channel of a simple structure, and a fuel cell stack including the separator that is reduced in its total volume using a thin plate for the separator.

### Advantageous Effects

According to example embodiments described herein, it is possible to form a channel through which two types of reaction gas, for example, hydrogen and air, may flow on both sides of a single thin plate using an embossing structure of the thin plate.

According to example embodiments described herein, it is possible to reduce a pressure difference between an inlet and an outlet for a reaction gas by arranging, on a reaction surface, a plurality of straight linear channels parallel to each other, in lieu of a plurality of complex meandering channels.

According to example embodiments described herein, it is possible to improve a processability of a separator by distributing a plurality of straight linear channels and a plurality of bar-type structures vertical to the straight channels. Thus, it is possible to manufacture the separator using a carbon thin plate with a relatively less processability, in addition to using a metal thin plate with an unrestricted processability.

According to example embodiments described herein, it is possible to uniformly flow gas based on lengths and positions of a plurality of bar-type structures.

According to example embodiments described herein, it is possible to improve a cooling efficiency of a high-temperature polymer electrolyte membrane fuel cell (HT-PEMFC) using a single independent cooling plate for each of a plurality of separators by reducing a thickness of the separators.

According to example embodiments described herein, it is possible to use a carbon-based thin plate separator, and thereby reduce a size of a fuel cell stack and system and greatly reduce a cost for producing the fuel cell stack and system, instead of using a thick carbon separator in replacement of a metal separator vulnerable to corrosion and having a relatively short life for a fuel cell used for residential and commercial buildings.

### Technical Solutions

According to an example embodiment, there is provided a high-temperature polymer electrolyte membrane fuel cell (HT-PEMFC) separator including a first inlet configured to receive a first reaction gas, a first outlet configured to discharge the first reaction gas, a first reaction surface disposed between the first inlet and the first outlet, a second inlet configured to receive a second reaction gas, a second outlet configured to discharge the second reaction gas, and a second reaction surface disposed between the second inlet and the second outlet. The first reaction surface may include a plurality of first straight channels through which the first reaction gas flows. A first diverging portion may be disposed between the first inlet and the first reaction surface and configured to uniformly divide the first reaction gas into the plurality of first straight channels from the first inlet by a plurality of projections each elongated in a direction perpendicular to the plurality of first straight channels.

The first diverging portion may include a plurality of first port-side projections formed near to the first inlet in a longitudinal direction of the plurality of first straight channels and disposed separately from each other in a direction perpendicular to the longitudinal direction of the plurality of first straight channels to form a plurality of first port-side gaps, and a plurality of first channel-side projections formed nearer to the first reaction surface than the plurality of first port-side projections in the longitudinal direction of the plurality of first straight channels and disposed separately from each other in a direction perpendicular to the longitudinal direction of the plurality of first straight channels to form a plurality of first channel-side gaps. A length of each of the plurality of first channel-side projections may be less than a length of a nearest first port-side projection among the plurality of first port-side projections.

A width of the plurality of first channel-side gaps may be constant.

A length of the plurality of first port-side projections may decrease as a distance from a center of the first inlet increases in a direction perpendicular to the longitudinal direction of the plurality of first straight channels.

A width of the plurality of first port-side gaps may decrease as a distance from a center of the first inlet increases in a direction perpendicular to the longitudinal direction of the plurality of first straight channels.

The first diverging portion may further include a plurality of first middle-side projections formed between the plurality of first port-side projections and the plurality of first channel-side projections in the longitudinal direction of the plurality of first straight channels and disposed separately from each other in a direction perpendicular to the longitudinal direction of the plurality of first straight channels to form a plurality of first middle-side gaps. A length of each of the plurality of first middle-side projections may be less than a length of a neighboring first port-side projection among the plurality of first port-side projections.

A number of the plurality of first port-side gaps, a number of the plurality of first middle-side gaps, and a number of the plurality of first channel-side gaps may increase sequentially from the first inlet towards the first reaction surface.

A width of each of the plurality of first middle-side gaps may be less than a width of a nearest first port-side gap, and greater than a width of a nearest first channel-side gap.

The plurality of first middle-side projections may include a first main middle-side projection completely overlapping a nearest first port-side gap when viewed in the longitudinal direction of the plurality of first straight channels, and a first sub middle-side projection completely overlapping a neighboring first port-side gap when viewed in the longitudinal direction of the plurality of first straight channels.

A length of the first sub middle-side projection may be less than a length of the first main middle-side projection.

The plurality of first channel-side projections may include a first main channel-side projection completely overlapping a nearest first middle-side gap when viewed in the longitudinal direction of the plurality of first straight channels, and a first sub channel-side projection completely overlapping a neighboring first middle-side gap when viewed in the longitudinal direction of the plurality of first straight channels.

When viewed in the longitudinal direction of the plurality of first straight channels, at least two first sub channel-side projections may overlap one of the plurality of first middle-side projections.

The first inlet may include a plurality of first inlet-side projections configured to allow the first reaction gas to be divided into a plurality of branches and flow into the first diverging portion.

The second reaction surface may include a plurality of second straight channels parallel to the plurality of first straight channels and through which the second reaction gas flows. A second diverging portion may be disposed between the second inlet and the second reaction surface and configured to uniformly divide the second reaction gas into the plurality of second straight channels from the second inlet by a plurality of projections each elongated in a direction perpendicular to the plurality of second straight channels. The plurality of first straight channels and the plurality of second straight channels may not overlap each other in a thickness direction of the HT-PEMFC separator. The plurality of projections of the first diverging portion and the plurality of projections of the second diverging portion may not overlap each other in the thickness direction of the HT-PEMFC separator.

The first reaction gas may be air and the second reaction gas may be hydrogen. A width of the plurality of first straight channels through which the air flows may be greater than a width of the plurality of second straight channels through which the hydrogen flows.

The first reaction gas may be air and the second reaction gas may be hydrogen. A distance from the first inlet to a nearest projection among the plurality of projections of the first diverging portion may be less than a distance from the second inlet to a nearest projection among the plurality of projections of the second diverging portion.

According to another example embodiment, there is provided an HT-PEMFC stack including a plurality of cell units including a plurality of separators and a plurality of membrane electrode assemblies (MEAs) each disposed between the plurality of separators, and a cooling assembly including a plurality of first independent cooling plates respectively disposed on an upper surface of the plurality of cell units and a plurality of second independent cooling plates respectively disposed on a lower surface of the plurality of cell units. Each of the plurality of separators may include a first reaction surface including a plurality of first straight channels, a second reaction surface disposed opposite to the first reaction surface and including a plurality of second straight channels, a plurality of first projections each elongated in a direction perpendicular to the plurality of first straight channels and formed at an inlet or an outlet of the plurality of first straight channels such that a first reaction gas uniformly flows to the plurality of first straight channels, and a plurality of second projections each elongated in a direction perpendicular to the plurality of second straight channels and formed at an inlet or an outlet of the plurality of second straight channels such that a second reaction gas uniformly flows to the plurality of second straight channels.

According to still another example embodiment, there is provided a method of manufacturing an HT-PEMFC separator, the method including preparing a thin plate, forming, at a center of the thin plate, a first reaction surface including a plurality of first straight channels parallel to each other, and forming, at an inlet or an outlet of the plurality of first straight channels, a plurality of first projections each elongated in a direction perpendicular to the plurality of first straight channels such that a first reaction gas uniformly flows to the plurality of first straight channels.

The method may further include forming, on a surface opposite to the first reaction surface, a second reaction surface including a plurality of second straight channels parallel to each other, and forming, at an inlet or an outlet of the plurality of second straight channels, a plurality of second projections each elongated in a direction perpendicular to the plurality of second straight channels such that a second reaction gas uniformly flows to the plurality of second straight channels.

The plurality of first straight channels and the plurality of second projections may be simultaneously formed by pressing the thin plate in one direction. The plurality of second straight channels and the plurality of first projections may be simultaneously formed not to overlap the plurality of first straight channels and the plurality of second projections by pressing the thin plate in another direction opposite to the one direction.

The preparing of the thin plate may include preparing the thin plate using a conductive carbon composite material formed by impregnating a carbon material with epoxy-based resin.

Additional aspects of example embodiments will be set forth in part in the description which follows and, in part, will be apparent from the description, or may be learned by practice of the disclosure.

### Brief Description of Drawings

These and/or other aspects, features, and advantages of the present disclosure will become apparent and more readily appreciated from the following description of example embodiments, taken in conjunction with the accompanying drawings of which:
FIG. 1 is a front view of a high-temperature polymer electrolyte membrane fuel cell (HT-PEMFC) stack according to an example embodiment;
FIG. 2 illustrates a support assembly included in an HT-PEMFC stack according to an example embodiment;
FIG. 3 illustrates a cell unit and a cooling plate included in an HT-PEMFC stack according to an example embodiment;
FIG. 4 is a top view of an end plate according to an example embodiment;
FIG. 5 is a top view of a first independent cooling plate according to an example embodiment;
FIG. 6 is a top view of a second independent cooling plate according to an example embodiment;
FIG. 7 is an exploded view of a cell unit according to an example embodiment;
FIG. 8 illustrates a cathode channel-side surface of a separator according to an example embodiment;
FIG. 9 illustrates an anode channel-side surface of a separator according to an example embodiment;
FIG. 10A is a partially enlarged view of FIG. 8;
FIG. 10B is a cross-sectional view cut along a I-I line of FIG. 10A;
FIA. 11A is a partially enlarged view of FIG. 9;
FIG. 11B is a cross-sectional view cut along a II-II line of FIG. 11A;
FIG. 12 is a flowchart illustrating a separator manufacturing method according to an example embodiment; and
FIG. 13 is a flowchart illustrating a pressing operation according to an example embodiment.

### Best Mode for Carrying Out the Invention

Hereinafter, example embodiments will be described in detail with reference to the accompanying drawings. Regarding the reference numerals assigned to the elements in the drawings, it should be noted that the same elements will be designated by the same reference numerals, wherever possible, even though they are shown in different drawings.

The terminology used herein is for the purpose of describing particular embodiments only and is not intended to limit the present disclosure. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, operations, elements, and/or components, but do not preclude the presence or addition of one or more other features, integers, operations, elements, components, and/or groups thereof.

Terms such as first, second, A, B, (a), (b), and the like may be used herein to describe components. Each of these terminologies is not used to define an essence, order, or sequence of a corresponding component but used merely to distinguish the corresponding component from other component(s). For example, a first component may be referred to as a second component, and similarly the second component may also be referred to as the first component.

It should be noted that if it is described in the specification that one component is "connected," "coupled," or "joined" to another component, a third component may be "connected," "coupled," and "joined" between the first and second components, although the first component may be directly connected, coupled or joined to the second component. In addition, it should be noted that if it is described in the specification that one component is "directly connected" or "directly joined" to another component, a third component may not be present therebetween. Likewise, expressions, for example, "between" and "immediately between" and "adjacent to" and "immediately adjacent to" may also be construed as described in the foregoing.

Unless otherwise defined, all terms, including technical and scientific terms, used herein have the same meaning as commonly understood by one of ordinary skill in the art to which this disclosure pertains based on an understanding of the present disclosure. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

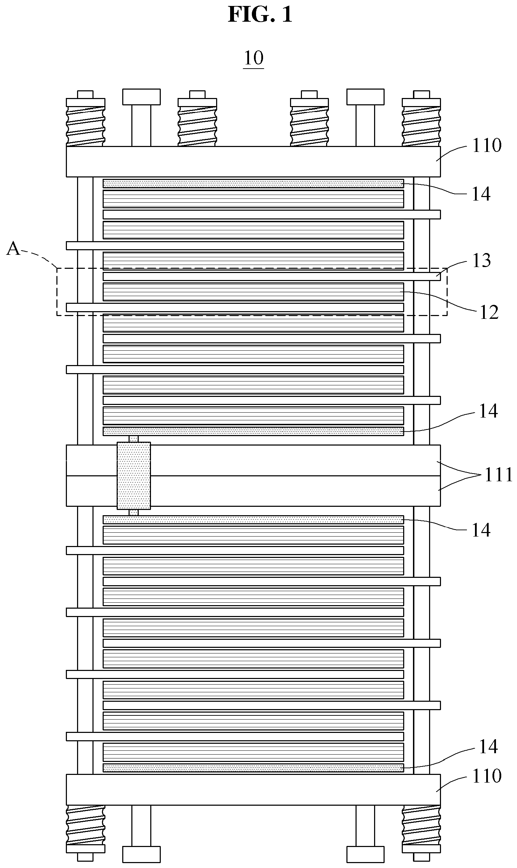

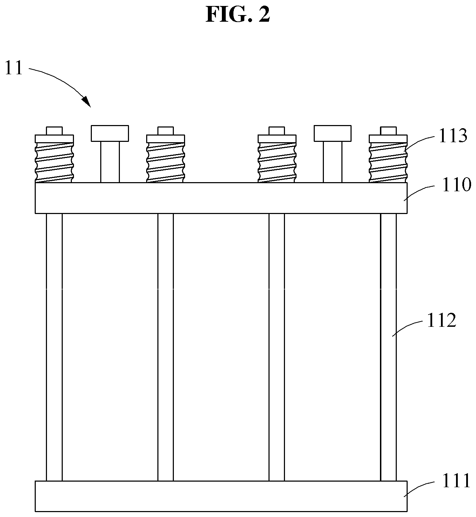

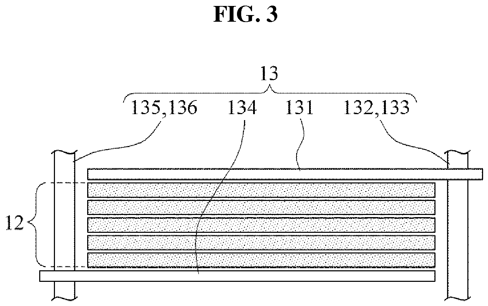

FIG. 1 is a front view of a high-temperature polymer electrolyte membrane fuel cell (HT-PEMFC) stack according to an example embodiment. FIG. 2 illustrates a support assembly included in an HT-PEMFC stack according to an example embodiment. FIG. 3 illustrates a cell unit and a cooling plate included in an HT-PEMFC stack according to an example embodiment. FIG. 3 is a view of an A portion of FIG. 1 with a clamping bar 112 omitted therefrom.

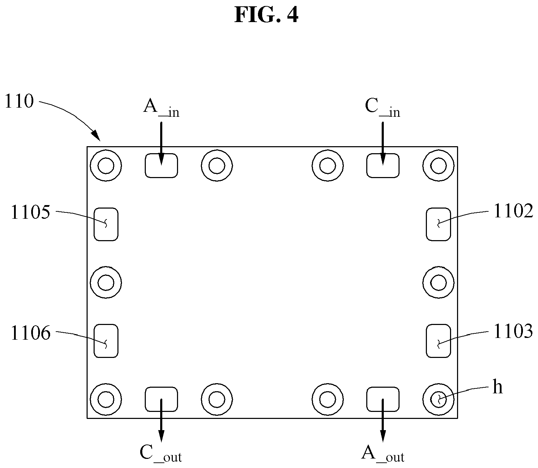

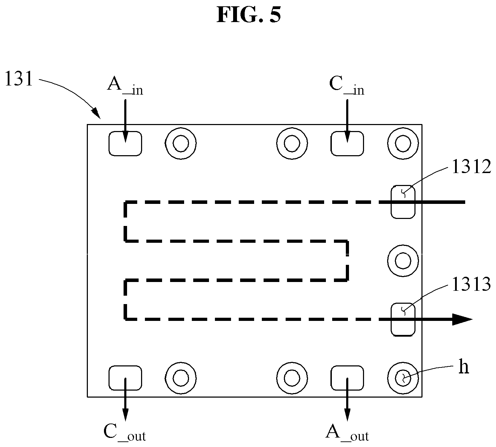

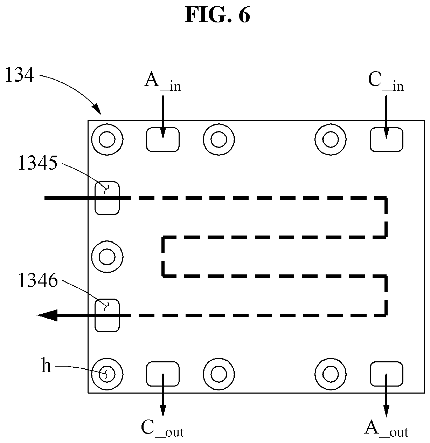

FIG. 4 is a top view of an end plate according to an example embodiment. FIG. 5 is a top view of a first independent cooling plate according to an example embodiment. FIG. 6 is a top view of a second independent cooling plate according to an example embodiment.

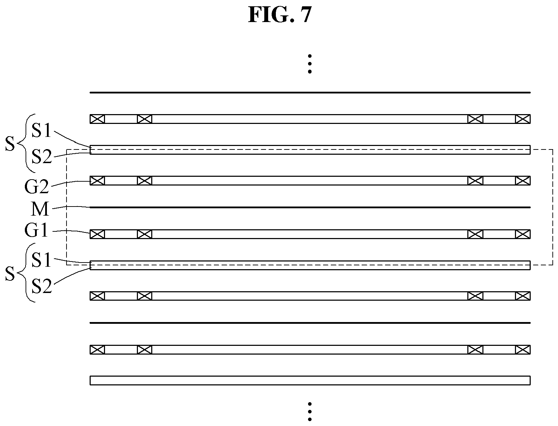

FIG. 7 is an exploded view of a cell unit according to an example embodiment.

Referring to FIGS. 1 through 7, an HT-PEMFC stack 10 includes a support assembly 11, a cell unit 12, a cooling assembly 13, and a current collector 14 configured to provide a generated current to an outside.

The support assembly 11 supports the cell unit 12 which is provided as a plurality of cell units 12, and the cooling assembly 13. The support assembly 11 includes an end plate 110, a middle end plate 111, the clamping bar 112, and a relief spring 113.

The end plate 110, which is a plate to be fastened to each of both ends of the HT-PEMFC stack 10 and is thus provided as two end plates 110, presses other components disposed between the two end plates 110. The end plate 110 includes a first cooling medium inlet port 1102 through which a first cooling medium inlet channel 132 passes to guide a cooling medium to flow into a first cooling plate 131, a first cooling medium outlet port 1103 through which a first cooling medium outlet channel 133 passes to guide a cooling medium to be discharged from the first cooling plate 131, a second cooling medium inlet port 1105 through which a second cooling medium inlet channel 135 passes to guide a cooling medium to flow into a second cooling plate 134, a second cooling medium outlet port 1106 through which a second cooling medium outlet channel 136 passes to guide a cooling medium to be discharged from the second cooling plate 134, an anode inlet port (A_in) configured to guide hydrogen to flow into the cell unit 12, a cathode inlet port (C_in) configured to guide air to flow into the cell unit 12, an anode outlet port (A_out) configured to guide hydrogen to be discharged from the cell unit 12, a cathode outlet port (C_out) configured to guide air to be discharged from the cell unit 12, and a clamping hole (h) through which the clamping bar 112 penetrates.

The end plate 110 may be provided in, for example, a rectangular shape, for optimal utilization of space. In this example, the first cooling medium inlet port 1102 and the first cooling medium outlet port 1103 are formed on one side of four sides of the end plate 110, and the second cooling medium inlet port 1105 and the second cooling medium outlet port 1106 are formed on another side of the four sides of the end plate 110. For example, the first cooling medium inlet port 1102 and the first cooling medium outlet port 1103 may be disposed on a side opposite to a side on which the second cooling medium inlet port 1105 and the second cooling medium outlet port 1106 are disposed.

The clamping hole h is provided as a plurality of clamping holes h that are disposed separately from each other along an edge of the end plate 110. For example, the clamping hole h may be disposed at each of corners of the end plate 110, and thus at least one clamping hole h may be disposed between the corners.

The middle end plate 111 is a plate disposed at a center of the two end plates 110, and is provided to further improve a fixing force. The HT-PEMFC stack 10 may operate at a high temperature, and thus be thermally expanded further compared to a low-temperature polymer electrolyte membrane fuel cell (LT-PEMFC) stack. Thus, there may be a higher possibility that a separator included in the cell unit 12 is damaged by the thermal expansion. To prevent such a potential damage, a thickness of the separator may increase. However, when the thickness of the separator increases, only the two end plates 110 may not be sufficient for the fixing, and thus the middle end plate 111 may be additionally inserted to the center to further improve the fixing force.

The clamping bar 112 is fastened between the two end plates 110, or between each of the two end plates 110 and the middle end plate 111, to fix components disposed between the two end plates 110. The clamping bar 112 may be disposed to penetrate at least a portion of the components disposed between the two end plates 110 to desirably arrange the components.

The relief spring 113 is provided at an end of the clamping bar 112 to apply a pressure to the components disposed between the two end plates 110, or between each of the two end plates 110 and the middle end plate 111. Herein, a position and a length of the relief spring 113 may be adjusted to apply a constantly distributed pressure to the separator included in the cell unit 12.

Each cell unit 12 includes a plurality of separators S, a plurality of membrane electrode assemblies (MEAs) M each disposed between the separators S, and a plurality of gaskets G1 and G2 disposed on both surfaces of each of the MEAs M. For example, the cell unit 12 may include five separators S, and gaskets G1 and G2 and MEAs M disposed between a pair of neighboring separators S, respectively. Herein, the cell unit 12 may be construed as an assembly of the separators S disposed between the two cooling plates 131 and 134. The cell unit 12 may be provided as a plurality of cell units 12 stacked in a vertical direction. Herein, based on the number of the cell units 12, a total output of the HT-PEMFC stack 10 may be determined.

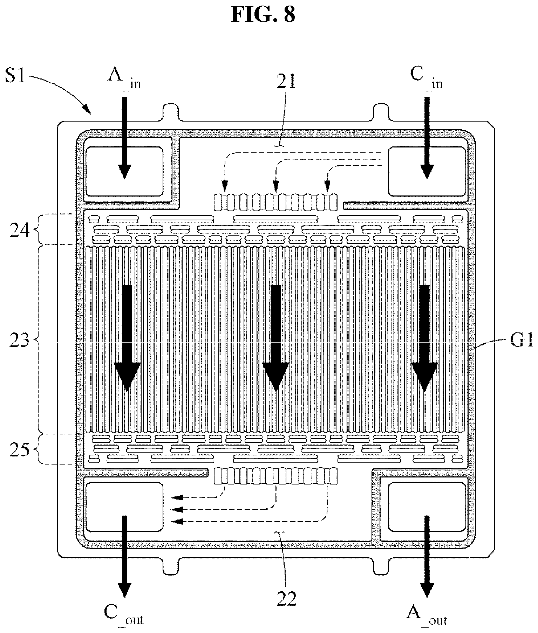

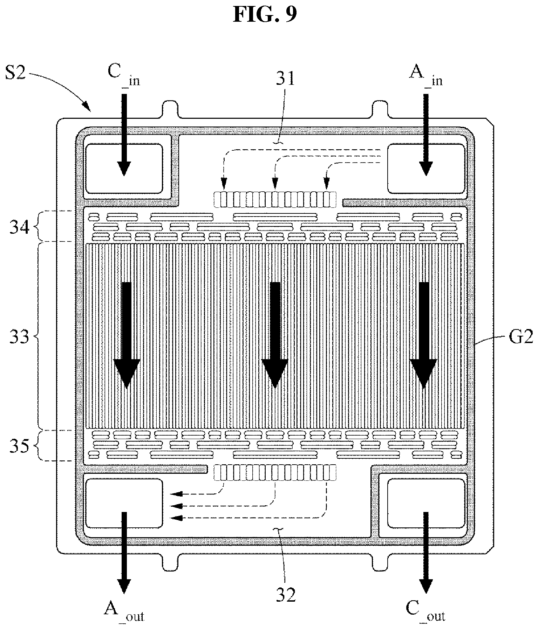

Each of the separators S included in the cell unit 12 includes a first surface S1 in which a cathode channel is formed to allow air to flow (as illustrated in FIG. 8), and a second surface S2 in which an anode channel is formed to allow hydrogen to flow (as illustrated in FIG. 9). Herein, the first surface S1 and the second surface S2 may be construed as corresponding to both surfaces of a thin plate. Each of the separators S may not include a cooling medium channel through which a cooling medium flows. As described hereinafter, a cooling function may be performed through the cooling assembly 13 using an independent cooling plate, instead of forming the cooling medium channel in the cell unit 12. As illustrated, a first gasket G1 and a second gasket G2 are disposed on the first surface S1 and the second surface S2, respectively, and an MEA M is disposed between the first gasket G1 and the second gasket G2.

The cooling assembly 13 is provided to remove heat generated in the HT-PEMFC stack 10, and is configured to flow a cooling medium through an external manifold structure to remove heat generated in the cell unit 12. Herein, by inserting the cooling plates 131 and 134 in an upper surface and a lower surface, respectively, of the cell unit 12 including the plurality of separators S based on a thickness of the separators S, instead of inserting a cooling plate in each of the separators S, it is possible to prevent the HT-PEMFC stack 10 from being extremely thick.

The cooling assembly 13 includes the first cooling plate 131 which is also referred to as a first independent cooling plate 131 and provided as a plurality of first independent cooling plates 131, and disposed on the upper surface of the cell unit 12, the first cooling medium inlet channel 132 configured to guide a cooling medium to flow into each first independent cooing plate 131, the first cooling medium outlet channel 133 configured to guide the cooling medium to be discharged from each first independent cooling plate 131, the second cooling plate 134 which is also referred to as a second independent cooling plate 134 and provided as a plurality of second independent cooling plates 134, and disposed on the lower surface of the cell unit 12, the second cooling medium inlet channel 135 configured to guide a cooling medium to flow into each second independent cooling plate 134, and the second cooling medium outlet channel 136 configured to guide the cooling medium to be discharged from each second independent cooling plate 134.

Each of the first independent cooling plates 131 and the second independent cooling plates 134 may be formed of a metal material having a strength higher than that of the cell unit 12, for example, stainless steel (SUS) metal. In this example, a mechanical strength may increase compared to an existing cooling plate, and it is thus possible to prevent a cooling plate from being damaged even under a high-temperature operation condition.

Conventionally, a cooling channel may be integrally formed inside a separator to form an internal manifold cooling structure. However, under a high-temperature operation condition, the cooling channel may be damaged, and a cooling medium may be leaked out to degrade the performance. In addition, a graphite plate formed of a mixture of a porous medium and an engineering plastic filling the porous medium may be used as the separator. In this case, an LT-PEMFC may use, as a cooling medium, water with a high surface tension. However, an HT-PEMFC may use, as a cooling medium, oil with a high boiling point. Thus, due to a high temperature and a low surface tension of oil, oil may permeate an inside of the separator formed of the different materials and thus the performance may be degraded greatly. However, by forming the external manifold cooling structure such that each separator included in the cell unit 12 does not include a cooling channel, and using an independent cooling plate formed of a metal material with a high mechanical strength, it is possible to greatly reduce a possibility of the separator being damaged. In addition, it is also possible to prevent a cooling medium from directly or indirectly flowing into the separator although the separator is damaged, and thereby improving the durability considerably.

When the cooling plates 131 and 134, and the cell unit 12 are formed of different materials, a contact resistance between both surfaces may be great compared to when formed of a same material, and thus a buffer layer may be inserted between the cooling plates 131 and 134 and the cell unit 12 to reduce the contact resistance. That is, the HT-PEMFC stack 10 further includes a first buffer layer disposed between the first independent cooling plate 131 and the upper surface of the cell unit 12 and a second buffer layer disposed between the second independent cooling plate 134 and the lower surface of the cell unit 12. The first buffer layer and the second buffer layer may be formed of a highly-conductive and flexible material.

For example, the buffer layers may be formed of one selected from a group consisting of a gas diffusion layer (GDL), a GDL in which microporous layers (MPLs) are stacked, a grafoil, and a metal foam.

The GDL may be formed of a porous carbon-based material such as a carbon paper and a carbon cloth formed of carbon fiber. The GDL may be electrically conductive and porous and may thus reduce a contact resistance with a separator.

In addition, the GDL may be manufactured in a form of stacked MPLs formed by applying a slurry of micron-sized conductive carbon particles onto a GDL and drying the GDL. Through this, a conductivity may be improved.

The grafoil may be a carbon-based conductive sealing material.

The metal foam may be an elastic and conductive member formed of a thin wire metal material and having a volume.

The first independent cooling plate 131 includes a first cooling medium inlet port 1312 and a first cooling medium outlet port 1313 which are connected to the first cooling medium inlet channel 132 and the first cooling medium outlet channel 133, respectively, and communicate with a cooling medium channel formed in the first independent cooling plate 131. A cooling medium flowing in through the first cooling medium inlet channel 132 may be divided to flow into each first cooling medium inlet port 1312 formed in each first independent cooling plate 131, remove heat generated in the cell unit 12 while flowing in each first independent cooling plate 131, and then be discharged to the single first cooling medium outlet channel 133 through each first cooling medium outlet port 1313.

The first independent cooling plate 131 includes a first projection portion which does not overlap the cell unit 12 in a stacking direction of the cell unit 12, for example. Herein, the stacking direction of the cell unit 12 may indicate a direction in which a plurality of cell units 12 is stacked. The first cooling medium inlet port 1312 and the first cooling medium outlet port 1313 are formed in the first projection portion.

The second independent cooling plate 134 includes a second cooling medium inlet port 1345 and a second cooling medium outlet port 1346 which are connected to the second cooling medium inlet channel 135 and the second cooling medium outlet channel 136, respectively, and communicate with a cooling medium channel formed in the second independent cooling plate 134. A cooling medium flowing in through the single second cooling medium inlet channel 135 may be divided to flow into each second cooling medium inlet port 1345 formed in each second independent cooling plate 134, remove heat generated in the cell unit 12 while flowing in each second independent cooling plate 134, and then be discharged to the single second cooling medium outlet channel 136 through each second cooling medium outlet port 1346.

The second independent cooling plate 134 includes a second projection portion which does not overlap the cell unit 12 in the stacking direction of the cell unit 12, for example. The second cooling medium inlet port 1345 and the second cooling medium outlet port 1346 are formed in the second projection portion. In addition, the second projection portion does not overlap the first projection portion in the stacking direction of the cell unit 12.

The first cooling medium inlet channel 132, the first cooling medium outlet channel 133, the second cooling medium inlet channel 135, and the second cooling medium outlet channel 136 are extended along the stacking direction of the cell unit 12. The second cooling medium inlet channel 135 and the second cooling medium outlet channel 136 are disposed on an opposite side of the first cooling medium inlet channel 132 and the first cooling medium outlet channel 133.

Through such a four external manifold cooling structure, the cell unit 12 may be cooled while cooling mediums are flowing in zigzags in opposite directions. In addition, through the installation of a plurality of cooling medium inlet channels and a plurality of cooling medium outlet channels, a fluidity of a cooling medium may be improved further, compared to the installation of a single cooling medium inlet channel and a single cooling medium outlet channel. Although an example of two cooling medium inlet channels and two cooling medium outlet channels has been described herein, an example of three cooling medium inlet channels and three cooling medium outlet channels may also be included in a scope of this present disclosure.

FIG. 8 illustrates a cathode channel-side surface of a separator according to an example embodiment. FIG. 9 illustrates an anode channel-side surface of a separator according to an example embodiment.

Referring to FIGS. 8 and 9, a separator S includes a first surface S1 on a side of cathode channel and a second surface S2 on a side of anode channel. As illustrated in FIGS. 8 and 9, air and hydrogen may flow into the first surface S1 and the second surface S2, respectively. However, examples are not limited to the example illustrated in FIGS. 8 and 9. In contrast to the illustrated example, hydrogen may flow into the first surface S1 and air may flow into the second surface S2. In this example, one gas between air and hydrogen is referred to as a first reaction gas, and the other gas between air and hydrogen is referred to as a second reaction gas.

The first surface S1 includes a first inlet 21 configured to receive the first reaction gas, a first outlet 22 configured to discharge the first reaction gas, a first reaction surface 23 disposed between the first inlet 21 and the first outlet 22, a first diverging portion 24 disposed between the first inlet 21 and the first reaction surface 23, and a first converging portion 25 disposed between the first reaction surface 23 and the first outlet 22.

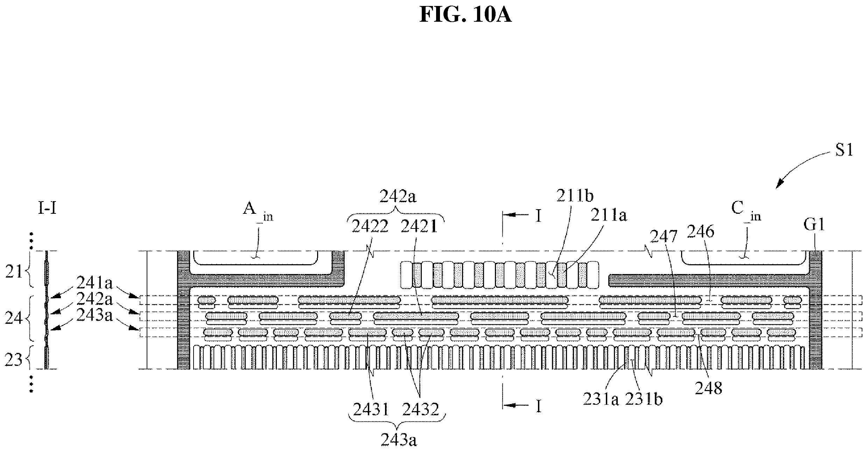

The first reaction surface 23 includes a plurality of first straight channels 231b as illustrated in FIG. 10A through which the first reaction gas flows. Through a structure of such first straight channels 231b, it is possible to maintain a pressure difference of a fuel cell stack to be low. In addition, through a structure of projections formed in the first diverging portion 24 and the first converging portion 25 as described hereinafter, it is possible to allow a reaction gas to uniformly flow up to a farthermost straight channel from a center. Further, since a driving temperature of an HT-PEMFC is 100 °C or higher and water generated in a channel may evaporate, and thus a blocking phenomenon, which is a disadvantage of a straight channel, may not occur. Thus, according to an example embodiment, it is possible to uniformly flow a reaction gas even in a case of a square structure of all separators S, in addition to a case in which the separators S are elongated along a longitudinal direction of the straight channels 231b.

The first diverging portion 24 includes a plurality of first diverging-side projections 241a, 242a, and 243a as illustrated in FIG. 10A, each of which being elongated in a direction perpendicular to the first straight channels 231b of the first reaction surface 23, and is configured to allow the first reaction gas to uniformly diverge to the first straight channels 231b from the first inlet 21.

The first converging portion 25 includes a plurality of first converging-side projections each elongated in a direction perpendicular to the first straight channels 231b of the first reaction surface 23, and is configured to allow the first reaction gas to uniformly converge on the first outlet 22 from the first straight channels 231b. Thus, such a structure of the projections formed in the first converging portion 25 may help the first reaction gas uniformly flow onto the first reaction surface 23. The first converging portion 25 may be provided in a shape symmetrical to that of the first diverging portion 24 based on the first reaction surface 23. The first diverging-side projections 241a, 242a, and 243a and the first converging-side projections may be collectively referred to as a plurality of first projections. That is, the first projections may be formed in an inlet portion and/or outlet portion of the first straight channels 231b. The description of the first diverging portion 24 may be applicable to the first converging portion 25 unless otherwise stated, and thus a repeated description will be omitted here for brevity.

Similar to the first surface S1, the second surface S2 includes a second inlet 31 configured to receive a second reaction gas, a second outlet 32 configured to discharge the second reaction gas, a second reaction surface 33 disposed between the second inlet 31 and the second outlet 32, a second diverging portion 34 disposed between the second inlet 31 and the second reaction surface 33, and a second converging portion 35 disposed between the second reaction surface 33 and the second outlet 32.

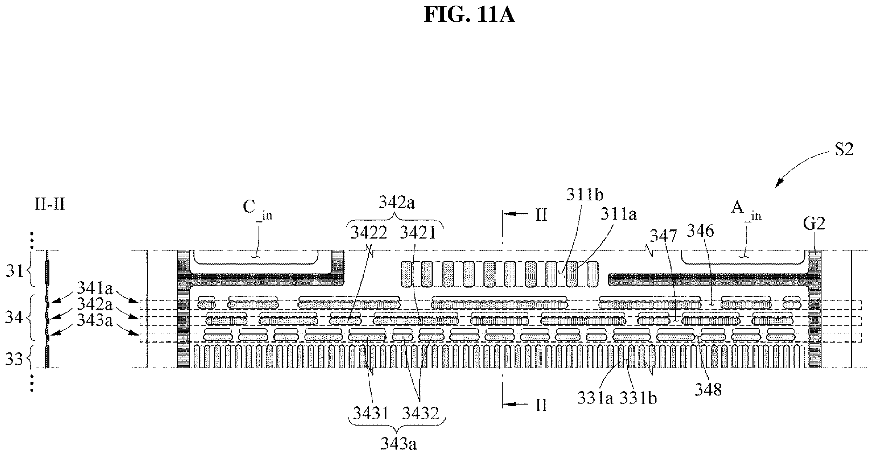

The second reaction surface 33 is disposed opposite to the first reaction surface 23, and includes a plurality of second straight channels 331b through which the second reaction gas flows as illustrated in FIG. 11A. The second straight channels 331b are parallel to the first straight channels 231b.

The second diverging portion 34 and the second converging portion 35 include a plurality of second diverging-side projections 341a, 342a, and 343a as illustrated in FIG. 11A, and a plurality of second converging-side projections, respectively, each of which being elongated in a direction perpendicular to the second straight channels 331b. The second diverging-side projections 341a, 342a, and 343a and the second converging-side projections may be collectively referred to as a plurality of second projections. That is, the second projections may be formed in an inlet portion and/or outlet portion of the second straight channels 331b.

The description of the first surface S1 may be applicable to the second surface S2 unless otherwise stated, and thus a repeated description will be omitted here for brevity.

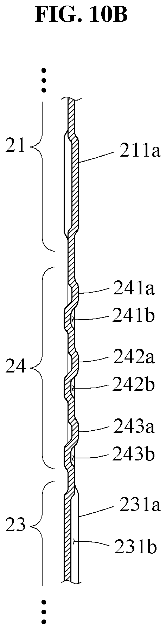

FIG. 10A is a partially enlarged view of FIG. 8, and FIG. 10B is a cross-sectional view cut along a I-I line of FIG. 10A.

Referring to FIGS. 10A and 10B, the first inlet 21 includes a first inlet-side projection 211a and a first inlet-side groove 211b. The first inlet-side projection 211a is configured to allow a first reaction gas flowing from a first inlet port (C_in) to diverge into a plurality of branches to flow into the first diverging portion 24.

The first diverging portion 24 includes a plurality of projections 241a, 242a, and 243a, a plurality of grooves 241b, 242b, and 243b, and a plurality of gaps 246, 247, and 248.

The projection 241a, which is also referred to as a first port-side projection 241a, is formed to be near to the first inlet 21 in a longitudinal direction of the first straight channels 231b. The first port-side projection 241a may be provided as a plurality of first port-side projections 241a which are aligned in a line by being disposed separately from each other along a direction perpendicular to the longitudinal direction of the first straight channels 231b to form a plurality of first port-side gaps 246. As illustrated in FIG. 10A, lengths of the first port-side projections 241a may decrease as a distance from a center of the first inlet 21 to the direction perpendicular to the longitudinal direction of the first straight channels 231b increases.

Through such a structure, it is possible to prevent the first reaction gas from flowing more into a first straight channel 231b disposed nearer to the first inlet 21. For example, through such a structure of projections, it is possible to design respective distances from the first inlet 21 to all the first straight channels 231b to be substantially identical. For example, when a first straight channel 231b is disposed nearer to the first inlet 21, it is possible to uniformly distribute an identical amount of flow of the first reaction gas to flow into all the first straight channels 231b by increasing a flow path from the first inlet 21 to the first straight channel 231b.

In addition, widths of the first port-side gaps 246 may decrease as a distance from the center of the first inlet 21 to a direction perpendicular to the longitudinal direction of the first straight channels 231b increases as illustrated in FIG. 10A. For example, through such a structure, it is possible to increase a pressure of the first reaction gas flowing into a first straight channel 231b disposed relatively farther from the first inlet 21. Thus, it is possible to prevent the first reaction gas from being stagnated in an outer side channel due to an imbalance of differential pressure between the first inlet 21 and the first outlet 22.

The projection 243a, which is also referred to as a first channel-side projection 243a, is formed to be nearer to the first reaction surface 23 than the first port-side projection 241a, in the longitudinal direction of the first straight channel 231b. The first channel-side projections 243a may be provided as a plurality of first channel-side projections 234a which are aligned in a line by being disposed separately from each other along a direction perpendicular to the longitudinal direction of the first straight channel 231b to form a plurality of first channel-side gaps 248. As illustrated, a length of each of the first channel-side projections 243a may be shorter than that of a corresponding nearest first port-side projection 241a. In addition, widths of the first channel-side gaps 248 may be constant. Through such a structure, the first reaction gas may uniformly flow on the first reaction surface 23.

The projection 242a, which is also referred to as a first middle-side projection 242a, is formed between the plurality of first port-side projections 241a and the plurality of first channel-side projections 243a. The first middle-side projection 242a may be provided as a plurality of first middle-side projections 242a which are aligned in a line by being disposed separately from each other along a direction perpendicular to the longitudinal direction of the first straight channels 231b to form a plurality of first middle-side gaps 247. A length of each of the first middle-side projections 242a may be shorter than that of a corresponding nearest first port-side projection 241a.

The first middle-side projections 242a are classified into a first main middle-side projection 2421 and a first sub middle-side projection 2422 based on a positional relationship with the first port-side projections 241a.

The first main middle-side projection 2421 may completely overlap a nearest first port-side gap 246 when viewed in the longitudinal direction of the first straight channels 231b. That is, both ends of the first main middle-side projection 2421 may be disposed outer than both ends of the nearest first port-side gap 246.

The first sub middle-side projection 2422 may completely overlap a neighboring first port-side projection 241a when viewed in the longitudinal direction of the first straight channels 231b. That is, both ends of the first sub middle-side projection 2422 may be disposed inner than both ends of the neighboring first port-side projection 241a. For example, a length of the first sub middle-side projection 2422 may be shorter than a length of the first main middle-side projection 2421.

In addition, when there are the first middle-side projections 242a, the first channel-side projections 243a may be classified into a first main channel-side projection 2431 and a first sub channel-side projection 2432 based on a positional relationship with the first middle-side projections 242a.

The first main channel-side projection 2431 may completely overlap a nearest first middle-side gap 247 when viewed in the longitudinal direction of the first straight channels 231b. That is, both ends of the first main channel-side projection 2431 may be disposed outer than both ends of the nearest first middle-side gap 247.

The first sub channel-side projection 2432 may completely overlap a nearest first middle-side projection 242a when viewed in the longitudinal direction of the first straight channels 231b. That is, both ends of the first sub channel-side projection 2432 may be disposed inner than both ends of the nearest first middle-side projection 242a. For example, when viewed in the longitudinal direction of the first straight channels 231b, one of the first middle-side projections 242a may overlap at least two first sub channel-side projections 2432.

Herein, the number of the first port-side gaps 246, the number of first middle-side gaps 247, and the number of first channel-side gaps 248 may increase sequentially from the first inlet 21 towards the first reaction surface 23. In addition, a width of each of the first middle-side gaps 247 may be less than a width of a corresponding nearest first port-side gap 246, and greater than a width of a corresponding nearest first channel-side gap 248. Through such a structure described above, the number of branches of the first reaction gas flowing from the first inlet 21 towards the first reaction surface 23 may increase sequentially, and thus the first reaction gas may uniformly flow to the plurality of first straight channels 231b.

Similarly, the first converging portion 25 illustrated in FIG. 8 may also include a plurality of first port-side gaps, a plurality of first middle-side gaps, and a plurality of first channel-side gaps corresponding to those of the first diverging portion 24, and thus a more detailed and repeated description will be omitted here for brevity.

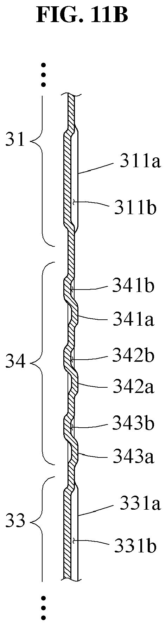

FIA. 11A is a partially enlarged view of FIG. 9, and FIG. 11B is a cross-sectional view cut along a II-II line of FIG. 11A.

Referring to FIGS. 11A and 11B, the plurality of second straight channels 331b may be formed not to overlap the plurality of first straight channels 231b as illustrated in FIGS. 10A and 10B in a thickness direction of separators S. In addition, the plurality of projections formed in the second diverging portion 34 may be formed not to overlap the plurality of projections formed in the first diverging portion 24 as illustrated in FIGS. 10A and 10B. Through such a structure, it is possible to form a separator through a simple pressing process using a single thin plate.

The second inlet 31 includes a second inlet-side projection 311a and a second inlet-side groove 311b. The second inlet-side projection 311a may allow the second reaction gas flowing in the second inlet port (A_in) to be divided into a plurality of branches to flow into the second diverging portion 34. The second inlet-side projection 311a may be formed on an opposite side of first inlet-side groove 211b illustrated in FIGS. 10A and 10B. Similarly, the second inlet-side groove 311b may be formed on an opposite side of the first inlet-side projection 211a illustrated in FIGS. 10A and 10B.

The second diverging portion 34 includes a plurality of projections 341a, 342a, and 343a, a plurality of grooves 341b, 342b, and 343b, and a plurality of gaps 346, 347, and 348.

The plurality of projections 341a, 342a, and 343a include a plurality of second port-side projections 341a which are formed on an opposite side of the first port-side grooves 241b illustrated in FIGS. 10A and 10B and aligned in a line by being disposed separately from each other along a direction perpendicular to the longitudinal direction of the second straight channels 331b to form a plurality of second port-side gaps 346; a plurality of second middle-side projections 342a formed on an opposite side of the first middle-side grooves 242b illustrated in FIGS. 10A and 10B and aligned in a line by being disposed separately from each other along a direction perpendicular to the longitudinal direction of the second straight channels 331b to form a plurality of second middle-side gaps 347; and a plurality of second channel-side projections 343a formed on an opposite side of the first channel-side grooves 243b illustrated in FIGS. 10A and 10B and aligned in a line by being disposed separately from each other along a direction perpendicular to the longitudinal direction of the second straight channels 331b to form a plurality of second channel-side gaps 348.

The plurality of grooves 341b, 342b, and 343b include a plurality of second port-side grooves 341b formed on an opposite side of the first port-side projections 241a illustrated in FIGS. 10A and 10B; a plurality of second middle-side grooves 342b formed on an opposite side of the first middle-side projections 242a illustrated in FIGS. 10A and 10B; and a plurality of second channel-side grooves 343b formed on opposite side of the first channel-side projections 243a illustrated in FIGS. 10A and 10B.

For example, in a case in which the first reaction gas is air and the second reaction gas is hydrogen, a width of the plurality of first straight channels 231b through which the air flows may be greater than a width of the plurality of second straight channels 331b through which the hydrogen flows. Through such a structure, it is possible to increase an amount of flow of the air and improve a reaction efficiency of oxygen O₂ and hydrogen H₂, and thus improve an efficiency of a fuel cell stack.

For example, in a case in which the first reaction gas is air and the second reaction gas is hydrogen, a distance from the first inlet 21 illustrated in FIGS. 10A and 10B to a nearest first port-side projection 241a among the projections 241a, 242a, and 243a of the first diverging portion 24 illustrated in FIGS. 10A and 10B may be shorter than a distance from the second inlet 31 to a nearest second port-side projection 341a among the projections 341a, 342a, and 343a of the second diverging portion 34. Through such a structure, it is possible to effectively resolve, or alternatively, minimize, an issue that may be caused when a relatively greater amount of flow of the air, than an amount of flow of the hydrogen, is supplied and the air is not sufficiently distributed at an inlet side of the first diverging portion 24 into which the relatively greater amount of the air is introduced, and thus the air flows into a center side of the first straight channels 231b.

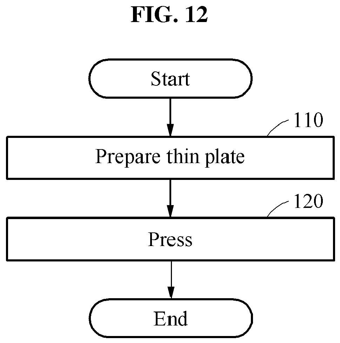

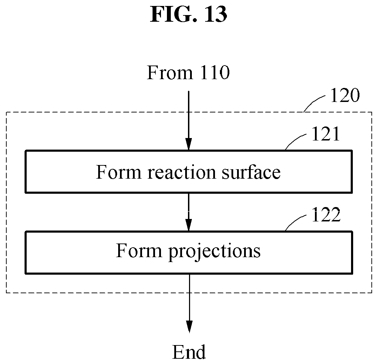

FIG. 12 is a flowchart illustrating a separator manufacturing method according to an example embodiment. FIG. 13 is a flowchart illustrating a pressing operation according to an example embodiment.

Referring to FIG. 12, a separator manufacturing method includes a thin plate preparing operation 110 and a pressing operation 120.

The thin plate preparing operation 110 may be performed using a conductive carbon composite material that is formed by, for example, impregnating a carbon material with epoxy-based resin. The carbon composite material may be, for example, a carbon graphite composite obtained by impregnating the carbon material with the epoxy-based resin. It may be generally known that, when using a carbon material, a separator may not be readily formed through a pressing process, although a processability of the carbon material is improved through the impregnating of the carbon material with the epoxy-based resin. Thus, the forming of the separator through the pressing process may be limited to a metal material. However, in a case of a separator of a simple type and shape as illustrated in FIGS. 8 through 11B, the separator may be manufactured through the pressing process using the carbon composite material. Thus, according to an example embodiment, the separator may be readily manufactured, and not be readily corroded under a high-temperature operation condition, dissimilar to a separator formed of a metal material.

The pressing operation includes operation 121 of forming a reaction surface at a center of the thin plate and operation 122 of forming projections.

The operation 121 of forming a reaction surface includes forming the first reaction surface 23 including the plurality of first straight channels 231b parallel to each other, and forming the second reaction surface 33 including the plurality of second straight channels 331b parallel to each other on a surface opposite to the first reaction surface 23.

The operation 122 of forming projections includes forming a plurality of first projections elongated in a direction perpendicular to the first straight channels 231b in an inlet portion and/or outlet portion of the first straight channels 231b, and forming a plurality of second projections elongated in a direction perpendicular to the second straight channels 331b in an inlet portion and/or outlet portion of the second straight channels 331b.

However, examples are not limited to the example illustrated in FIG. 13, and an order of operations 121 and 122 is not limited to what is described above. For example, operations 121 and 122 may be performed simultaneously.

For example, the first straight channels 231b and the second projections 341a, 342a, and 343a may be simultaneously formed by pressing the prepared thin plate in one direction.

The second straight channels 331b and the first projections 241a, 242a, and 243a may be simultaneously formed not to overlap the first straight channels 231b and the second projections 341a, 342a, and 343a by pressing the prepared thin plate in another direction opposite to the one direction.

In addition, it may also be possible to simultaneously form all of the first straight channels 231b, the second straight channels 331b, the first projections 241a, 242a, and 243a, and the second projections 341a, 342a, and 343a, by pressing the prepared thin plate in both directions simultaneously.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A high-temperature polymer electrolyte membrane fuel cell (HT-PEMFC) separator, comprising:
a first inlet configured to receive a first reaction gas;
a first outlet configured to discharge the first reaction gas;
a first reaction surface disposed between the first inlet and the first outlet;
a second inlet configured to receive a second reaction gas;
a second outlet configured to discharge the second reaction gas; and
a second reaction surface disposed between the second inlet and the second outlet,
wherein the first reaction surface includes a plurality of first straight channels through which the first reaction gas flows,
wherein a first diverging portion is disposed between the first inlet and the first reaction surface and configured to uniformly divide the first reaction gas into the plurality of first straight channels from the first inlet by a plurality of projections each elongated in a direction perpendicular to the plurality of first straight channels.

2. The HT-PEMFC separator of claim 1, wherein the first diverging portion includes:
a plurality of first port-side projections formed near to the first inlet in a longitudinal direction of the plurality of first straight channels and disposed separately from each other in a direction perpendicular to the longitudinal direction of the plurality of first straight channels to form a plurality of first port-side gaps; and
a plurality of first channel-side projections formed nearer to the first reaction surface than the plurality of first port-side projections in the longitudinal direction of the plurality of first straight channels and disposed separately from each other in a direction perpendicular to the longitudinal direction of the plurality of first straight channels to form a plurality of first channel-side gaps,
wherein a length of each of the plurality of first channel-side projections is less than a length of a nearest first port-side projection among the plurality of first port-side projections.

3. The HT-PEMFC separator of claim 2, wherein a width of the plurality of first channel-side gaps is constant.

4. The HT-PEMFC separator of claim 2, wherein a length of the plurality of first port-side projections decreases as a distance from a center of the first inlet increases in a direction perpendicular to the longitudinal direction of the plurality of first straight channels.

5. The HT-PEMFC separator of claim 2, wherein a width of the plurality of first port-side gaps decreases as a distance from a center of the first inlet increases in a direction perpendicular to the longitudinal direction of the plurality of first straight channels.

6. The HT-PEMFC separator of claim 2, wherein the first diverging portion further includes:
a plurality of first middle-side projections formed between the plurality of first port-side projections and the plurality of first channel-side projections in the longitudinal direction of the plurality of first straight channels and disposed separately from each other in a direction perpendicular to the longitudinal direction of the plurality of first straight channels to form a plurality of first middle-side gaps,
wherein a length of each of the plurality of first middle-side projections is less than a length of a neighboring first port-side projection among the plurality of first port-side projections.

7. The HT-PEMFC separator of claim 6, wherein a number of the plurality of first port-side gaps, a number of the plurality of first middle-side gaps, and a number of the plurality of first channel-side gaps increase sequentially from the first inlet towards the first reaction surface.

8. The HT-PEMFC separator of claim 6, wherein a width of each of the plurality of first middle-side gaps is less than a width of a nearest first port-side gap, and greater than a width of a nearest first channel-side gap.

9. The HT-PEMFC separator of claim 6, wherein the plurality of first middle-side projections includes:
a first main middle-side projection completely overlapping a nearest first port-side gap when viewed in the longitudinal direction of the plurality of first straight channels; and
a first sub middle-side projection completely overlapping a neighboring first port-side gap when viewed in the longitudinal direction of the plurality of first straight channels,
wherein a length of the first sub middle-side projection is less than a length of the first main middle-side projection.

10. The HT-PEMFC separator of claim 6, wherein the plurality of first channel-side projections includes:
a first main channel-side projection completely overlapping a nearest first middle-side gap when viewed in the longitudinal direction of the plurality of first straight channels; and
a first sub channel-side projection completely overlapping a neighboring first middle-side gap when viewed in the longitudinal direction of the plurality of first straight channels.

11. The HT-PEMFC separator of claim 10, wherein, when viewed in the longitudinal direction of the plurality of first straight channels, at least two first sub channel-side projections overlap one of the plurality of first middle-side projections.

12. The HT-PEMFC separator of claim 1, wherein the first inlet includes:
a plurality of first inlet-side projections configured to allow the first reaction gas to be divided into a plurality of branches and flow into the first diverging portion.

13. The HT-PEMFC separator of claim 1, wherein the second reaction surface includes:
a plurality of second straight channels parallel to the plurality of first straight channels and through which the second reaction gas flows,
wherein a second diverging portion is disposed between the second inlet and the second reaction surface and configured to uniformly divide the second reaction gas into the plurality of second straight channels from the second inlet by a plurality of projections each elongated in a direction perpendicular to the plurality of second straight channels,
wherein the plurality of first straight channels and the plurality of second straight channels do not overlap each other in a thickness direction of the HT-PEMFC separator, and
the plurality of projections of the first diverging portion and the plurality of projections of the second diverging portion do not overlap each other in the thickness direction of the HT-PEMFC separator.

14. The HT-PEMFC separator of claim 13, wherein the first reaction gas is air and the second reaction gas is hydrogen,
wherein a width of the plurality of first straight channels through which the air flows is greater than a width of the plurality of second straight channels through which the hydrogen flows.

15. The HT-PEMFC separator of claim 13, wherein the first reaction gas is air and the second reaction gas is hydrogen,
wherein a distance from the first inlet to a nearest projection among the plurality of projections of the first diverging portion is less than a distance from the second inlet to a nearest projection among the plurality of projections of the second diverging portion.

16. A high-temperature polymer electrolyte membrane fuel cell (HT-PEMFC) stack, comprising:
a plurality of cell units including a plurality of separators, and a plurality of membrane electrode assemblies (MEAs) each disposed between the plurality of separators; and
a cooling assembly including a plurality of first independent cooling plates respectively disposed on an upper surface of the plurality of cell units, and a plurality of second independent cooling plates respectively disposed on a lower surface of the plurality of cell units,
wherein each of the plurality of separators includes:
a first reaction surface including a plurality of first straight channels;
a second reaction surface disposed opposite to the first reaction surface and including a plurality of second straight channels;
a plurality of first projections each elongated in a direction perpendicular to the plurality of first straight channels, and formed at an inlet or an outlet of the plurality of first straight channels such that a first reaction gas uniformly flows to the plurality of first straight channels; and
a plurality of second projections each elongated in a direction perpendicular to the plurality of second straight channels, and formed at an inlet or an outlet of the plurality of second straight channels such that a second reaction gas uniformly flows to the plurality of second straight channels.

17. A method of manufacturing a high-temperature polymer electrolyte membrane fuel cell (HT-PEMFC) separator, the method comprising:
preparing a thin plate;
forming, at a center of the thin plate, a first reaction surface including a plurality of first straight channels parallel to each other; and
forming, at an inlet or an outlet of the plurality of first straight channels, a plurality of first projections each elongated in a direction perpendicular to the plurality of first straight channels such that a first reaction gas uniformly flows to the plurality of first straight channels.

18. The method of claim 17, further comprising:
forming, on a surface opposite to the first reaction surface, a second reaction surface including a plurality of second straight channels parallel to each other; and
forming, at an inlet or an outlet of the plurality of second straight channels, a plurality of second projections each elongated in a direction perpendicular to the plurality of second straight channels such that a second reaction gas uniformly flows to the plurality of second straight channels.

19. The method of claim 18, wherein the plurality of first straight channels and the plurality of second projections are simultaneously formed by pressing the thin plate in one direction, and
the plurality of second straight channels and the plurality of first projections are simultaneously formed not to overlap the plurality of first straight channels and the plurality of second projections by pressing the thin plate in another direction opposite to the one direction.

20. The method of claim 17, wherein the preparing of the thin plate comprises:
preparing the thin plate using a conductive carbon composite material formed by impregnating a carbon material with epoxy-based resin.

## Amended claims

### Amended claims in accordance with Rule 137(2) EPC.

**1.** A high-temperature polymer electrolyte membrane fuel cell (HT-PEMFC) separator, comprising:
a first inlet configured to receive a first reaction gas;
a first outlet configured to discharge the first reaction gas;
a first reaction surface disposed between the first inlet and the first outlet;
a second inlet configured to receive a second reaction gas;
a second outlet configured to discharge the second reaction gas; and
a second reaction surface disposed between the second inlet and the second outlet,
wherein the first reaction surface includes a plurality of first straight channels through which the first reaction gas flows,
wherein a first diverging portion is disposed between the first inlet and the first reaction surface and configured to uniformly divide the first reaction gas into the plurality of first straight channels from the first inlet by a plurality of projections each elongated in a direction perpendicular to the plurality of first straight channels,
wherein the first diverging portion includes:
a plurality of first port-side projections formed near to the first inlet in a longitudinal direction of the plurality of first straight channels and disposed separately from each other in a direction perpendicular to the longitudinal direction of the plurality of first straight channels to form a plurality of first port-side gaps; and
a plurality of first channel-side projections formed nearer to the first reaction surface than the plurality of first port-side projections in the longitudinal direction of the plurality of first straight channels and disposed separately from each other in a direction perpendicular to the longitudinal direction of the plurality of first straight channels to form a plurality of first channel-side gaps,
wherein a length of each of the plurality of first channel-side projections is less than a length of a nearest first port-side projection among the plurality of first port-side projections,
**characterized in that** a width of the plurality of first port-side gaps decreases as a distance from a center of the first inlet increases in a direction perpendicular to the longitudinal direction of the plurality of first straight channels.

**3.** The HT-PEMFC separator of claim 1, wherein a width of the plurality of first channel-side gaps is constant.

**4.** The HT-PEMFC separator of claim 1, wherein a length of the plurality of first port-side projections decreases as a distance from a center of the first inlet increases in a direction perpendicular to the longitudinal direction of the plurality of first straight channels.

**5.** A high-temperature polymer electrolyte membrane fuel cell (HT-PEMFC) separator, comprising:
a first inlet configured to receive a first reaction gas;
a first outlet configured to discharge the first reaction gas;
a first reaction surface disposed between the first inlet and the first outlet;
a second inlet configured to receive a second reaction gas;
a second outlet configured to discharge the second reaction gas; and
a second reaction surface disposed between the second inlet and the second outlet,
wherein the first reaction surface includes a plurality of first straight channels through which the first reaction gas flows,
wherein a first diverging portion is disposed between the first inlet and the first reaction surface and configured to uniformly divide the first reaction gas into the plurality of first straight channels from the first inlet by a plurality of projections each elongated in a direction perpendicular to the plurality of first straight channels,
wherein the first diverging portion includes:
a plurality of first port-side projections formed near to the first inlet in a longitudinal direction of the plurality of first straight channels and disposed separately from each other in a direction perpendicular to the longitudinal direction of the plurality of first straight channels to form a plurality of first port-side gaps; and
a plurality of first channel-side projections formed nearer to the first reaction surface than the plurality of first port-side projections in the longitudinal direction of the plurality of first straight channels and disposed separately from each other in a direction perpendicular to the longitudinal direction of the plurality of first straight channels to form a plurality of first channel-side gaps,
wherein a length of each of the plurality of first channel-side projections is less than a length of a nearest first port-side projection among the plurality of first port-side projections,
wherein the first diverging portion further includes:
a plurality of first middle-side projections formed between the plurality of first port-side projections and the plurality of first channel-side projections in the longitudinal direction of the plurality of first straight channels and disposed separately from each other in a direction perpendicular to the longitudinal direction of the plurality of first straight channels to form a plurality of first middle-side gaps,
wherein a length of each of the plurality of first middle-side projections is less than a length of a neighboring first port-side projection among the plurality of first port-side projections,
**characterized in that** a width of each of the plurality of first middle-side gaps is less than a width of a nearest first port-side gap, and greater than a width of a nearest first channel-side gap.

**6.** The HT-PEMFC separator of claim 5, wherein a number of the plurality of first port-side gaps, a number of the plurality of first middle-side gaps, and a number of the plurality of first channel-side gaps increase sequentially from the first inlet towards the first reaction surface.

**7.** The HT-PEMFC separator of claim 5, wherein the plurality of first middle-side projections includes:
a first main middle-side projection completely overlapping a nearest first port-side gap when viewed in the longitudinal direction of the plurality of first straight channels; and
a first sub middle-side projection completely overlapping a neighboring first port-side gap when viewed in the longitudinal direction of the plurality of first straight channels,
wherein a length of the first sub middle-side projection is less than a length of the first main middle-side projection.

**8.** The HT-PEMFC separator of claim 5, wherein the plurality of first channel-side projections includes:
a first main channel-side projection completely overlapping a nearest first middle-side gap when viewed in the longitudinal direction of the plurality of first straight channels; and
a first sub channel-side projection completely overlapping a neighboring first middle-side gap when viewed in the longitudinal direction of the plurality of first straight channels.

**9.** The HT-PEMFC separator of claim 8, wherein, when viewed in the longitudinal direction of the plurality of first straight channels, at least two first sub channel-side projections overlap one of the plurality of first middle-side projections.

**10.** The HT-PEMFC separator of claim 1, wherein the first inlet includes:
a plurality of first inlet-side projections configured to allow the first reaction gas to be divided into a plurality of branches and flow into the first diverging portion.

**11.** A high-temperature polymer electrolyte membrane fuel cell (HT-PEMFC) separator, comprising:
a first inlet configured to receive a first reaction gas;
a first outlet configured to discharge the first reaction gas;
a first reaction surface disposed between the first inlet and the first outlet;
a second inlet configured to receive a second reaction gas;
a second outlet configured to discharge the second reaction gas; and
a second reaction surface disposed between the second inlet and the second outlet,
wherein the first reaction surface includes a plurality of first straight channels through which the first reaction gas flows,
wherein a first diverging portion is disposed between the first inlet and the first reaction surface and configured to uniformly divide the first reaction gas into the plurality of first straight channels from the first inlet by a plurality of projections each elongated in a direction perpendicular to the plurality of first straight channels,
wherein the second reaction surface includes:
a plurality of second straight channels parallel to the plurality of first straight channels and through which the second reaction gas flows,
wherein a second diverging portion is disposed between the second inlet and the second reaction surface and configured to uniformly divide the second reaction gas into the plurality of second straight channels from the second inlet by a plurality of projections each elongated in a direction perpendicular to the plurality of second straight channels,
wherein the plurality of first straight channels and the plurality of second straight channels do not overlap each other in a thickness direction of the HT-PEMFC separator, and
the plurality of projections of the first diverging portion and the plurality of projections of the second diverging portion do not overlap each other in the thickness direction of the HT-PEMFC separator,
**characterized in that** the first reaction gas is air and the second reaction gas is hydrogen, and
**in that** a distance from the first inlet to a nearest projection among the plurality of projections of the first diverging portion is less than a distance from the second inlet to a nearest projection among the plurality of projections of the second diverging portion.

**12.** The HT-PEMFC separator of claim 11, wherein the first reaction gas is air and the second reaction gas is hydrogen,
wherein a width of the plurality of first straight channels through which the air flows is greater than a width of the plurality of second straight channels through which the hydrogen flows.
